# EUROPEAN PATENT APPLICATION

(11) **EP 4 568 271 A1**
(43) Date of publication of application: **11.06.2025**
(21) Application number: 23851393.1
(22) Date of filing: 26.06.2023
(51) Int. Cl.: H04R 1/08

(54) **MICROPHONE, BASE, SYSTEM AND METHOD APPLIED TO SMART VEHICLE, AND VEHICLE**

(30) Priority: 08.08.2022 CN 202210944787
(71) Applicant: Shenzhen Yinwang Intelligent Technologies Co., Ltd., Shenzhen, Guangdong 518129 (CN)
(72) Inventor: MO, Pinxi, Shenzhen, Guangdong 518129 (CN); WU, Sheng, Shenzhen, Guangdong 518129 (CN); QIU, Xiaojun, Shenzhen, Guangdong 518129 (CN)
(74) Representative: Körber, Martin Hans
(86) International application number: PCT/CN2023/102325
(87) International publication number: WO 2024/032166

(57) **Abstract**

This application provides a microphone, a base, and a system used in an intelligent vehicle, a method, and a vehicle. When the microphone is in contact connection to a microphone base, the microphone and the microphone base are in a wired connection state. When the microphone is separated from the microphone base, the microphone and the microphone base are in a wireless connection state. The microphone base is fastened to the intelligent vehicle. The microphone base is configured to pair with a microphone. The microphone is configured to cooperatively implement voice interaction in the intelligent vehicle. This application can optimize use performance of a vehicle-mounted microphone.

## Description

This application claims priority to Chinese Patent Application No. 202210944787.1, filed with the China National Intellectual Property Administration on August 8, 2022 and entitled "MICROPHONE, BASE, AND SYSTEM USED IN INTELLIGENT VEHICLE, METHOD, AND VEHICLE", which is incorporated herein by reference in its entirety.

### TECHNICAL FIELD

This application relates to the field of intelligent vehicle technologies, and in particular, to a microphone, a base, and a system used in an intelligent vehicle, a method, and a vehicle.

### BACKGROUND

There are a plurality of types of vehicle-mounted microphones. Each type of microphones has different audio functions. The vehicle-mounted microphones generally include interior sound pickup microphones, active noise cancellation microphones, exterior microphones, and the like. There are usually a plurality of interior sound pickup microphones distributed in places (for example, a vehicle roof) that are relatively close to a human mouth in the vehicle for cooperatively implementing functions such as voice interaction or calls in the vehicle, or calls between front and rear rows in the vehicle. There are usually a plurality of active noise cancellation microphones distributed in places that are relatively close to a human ear (for example, near a headrest) on each seat for monitoring a noise condition and better implementing active noise cancellation effect. The exterior microphone is deployed on an exterior surface of the vehicle and is usually for cooperatively implementing functions such as voice interaction outside the vehicle or calls between the inside and outside of the vehicle (when doors and windows are closed). However, a current vehicle-mounted microphone is affected by a surrounding environment. As a result, effect implemented by the vehicle-mounted microphone is not desirable. For example, an interior sound pickup microphone has low sound pickup quality, poor active noise cancellation effect, and the like, or an exterior microphone has high technical difficulty, low usage, and the like. Further optimization is needed.

### SUMMARY

Embodiments of this application disclose a microphone, a base, and a system used in an intelligent vehicle, a method, and a vehicle, to optimize use performance of the microphone, improve application effect of the microphone, and improve use flexibility of the microphone.

According to a first aspect, this application provides a microphone used in an intelligent vehicle. When the microphone is in contact connection to a microphone base, the microphone and the microphone base are in a wired connection state. When the microphone is separated from the microphone base, the microphone and the microphone base are in a wireless connection state. The microphone base is fastened to the intelligent vehicle. The microphone base is configured to pair with a microphone. The microphone is configured to cooperatively implement voice interaction in the intelligent vehicle.

Optionally, the microphone includes one or more of the following components: an acoustic transducer, a wireless chip, a wireless transceiver, a microcontroller unit MCU, a battery, an indicator, a circuit board, a first circuit connector, a first structural connector, and a housing.

The first circuit connector is configured to implement circuit connection between the microphone and the microphone base.

The first structural connector is configured to implement structural connection between the microphone and the microphone base.

Optionally, that the microphone is in contact connection to the microphone base includes: The microphone is in plug-in connection, magnetic connection, snap-fit connection, knob connection, or interference fit connection to the microphone base.

In this application, the microphone in the intelligent vehicle is connected to the base in a detachable manner, so that the microphone can be picked up for use when needed, to optimize use performance of the microphone and improve application effect of the microphone. For example, an interior sound pickup microphone can be picked up to approach a human mouth for use, to improve quality of a collected sound signal. For example, an active noise cancellation microphone in the vehicle can be picked up to approach a human ear, to improve effect of active noise cancellation. For example, because the microphone can be separated from the base, there is no need to dispose a microphone outside the vehicle, and the microphone inside the vehicle can be taken out of the vehicle for use, to implement a human-machine voice interaction function outside the vehicle or a function of communication between the inside and the outside of the vehicle. Usage of an exterior microphone is low. In addition, if a microphone is disposed outside the vehicle, resistance to high and low temperatures, rain, wind, frost, and dust need to be considered. Therefore, a special structure design needs to be introduced, resulting in an increase in costs. However, according to this application, a microphone does not need to be disposed outside the vehicle. This can reduce costs, and improve usage of the microphone in the vehicle. For example, the interior sound pickup microphone can be further picked up and used as a karaoke mike, further extending purposes of the microphone. For example, when the microphone is in a wireless connection state, a sound signal processing mode in a specific scenario can be further triggered, to improve user experience.

In a possible implementation, when the microphone is paired with the microphone base, the microphone is configured to determine a connection status between the microphone and the microphone base, where the connection status is a wired connection state or a wireless connection state.

In this application, after the microphone is paired with the base, a specific connection status between the microphone and the base can be determined, to send the connection status (in a wireless manner or in a wired manner through the base) to a processor in the vehicle, so that the processor can perform, based on the specific connection status, corresponding processing on the sound signal collected by the microphone, to improve user experience.

In a possible implementation, when the microphone is paired with the microphone base, the microphone inherits a type attribute of the microphone base, and the type attribute indicates function types of the microphone base and the microphone.

Optionally, the type attribute indicates that the function types of the microphone base and the microphone are a sound pickup microphone type; or the type attribute indicates that the function types of the microphone base and the microphone are an active noise cancellation microphone type.

In this application, the type attribute of the microphone base can be preconfigured. After the microphone is paired with the base, the type attribute of the base can be inherited. In this implementation, the type attribute of the microphone can be quickly determined without manual marking and pairing. This is flexible and convenient. In addition, when the vehicle includes a plurality of microphone bases, the microphone can be paired with any base for use. This is very flexible and convenient for management.

In a possible implementation, when the microphone is paired with the microphone base, position attributes of the microphone and the microphone base are the same, and the position attributes indicate positions of the microphone base and the microphone in the intelligent vehicle or relative to the intelligent vehicle.

In a possible implementation, when the microphone and the microphone base are in a wireless connection state, a position attribute of the microphone is determined based on a wireless positioning technology, and the position attribute indicates a position of the microphone in the intelligent vehicle or relative to the intelligent vehicle.

In this application, the position attribute of the microphone base is preconfigured. After the microphone is paired with the microphone base, regardless of whether the connection is a wired connection or a wireless connection, the microphone can inherit the position attribute of the base. Alternatively, when the microphone and the base are in a wireless connection state, the microphone can determine the position attribute of the microphone by using a wireless positioning capability of the microphone. After determining the position attribute of the microphone, the microphone can send the position attribute to the processor in the vehicle, so that the processor in the vehicle correspondingly responds, based on the position attribute of the microphone, to sound information collected by the microphone. For example, the microphone is located at a position of a front passenger, and the microphone collects a voice control instruction for instructing to open a vehicle window. In this case, the processor can control, based on the position of the microphone, to open only a vehicle window of the front passenger. According to this application, accurate voice control can be implemented, and user experience can be improved.

In a possible implementation, after the microphone is paired with the microphone base, the microphone is further configured to: disconnect the pairing with the microphone base; and pair with a microphone base other than the microphone base.

In this application, one microphone and one microphone base can form one microphone module. If the vehicle includes a plurality of microphone modules, these modules can be designed in a standardized manner or in a normalized manner. That is, the microphone can be paired with any microphone base, and the microphone base can also be paired with any microphone. Because the microphone modules in this application are designed in a standardized manner, costs of design, production, installation, maintenance, and management of a plurality of products can be reduced. Use costs of a user can also be reduced. For example, (1) after a sequence of microphones is changed, there is no need to restore previous pairing between a microphone and a base, and the microphone can be paired with any base again for use; (2) if a microphone is lost, a new microphone can be purchased, to pair with a base, and replacement or upgrade of the microphone can be completed without going to a 4S store.

In a possible implementation, the microphone is configured to send one or more of the following information to the microphone base:
a sound signal collected by the microphone, the position attribute of the microphone, the connection status between the microphone and the microphone base, the type attribute of the microphone, a model of the microphone, or a serial number of the microphone.

The position attribute indicates the position of the microphone in the intelligent vehicle or relative to the intelligent vehicle, the connection status is a wired connection state or a wireless connection state, and the type attribute indicates the function type of the microphone.

In this application, communication information between the microphone and the processor can be transmitted through the microphone base, and the base can send the communication information to the processor in a wired transmission manner or a wireless transmission manner, to implement flexible communication.

In a possible implementation, the microphone is configured to send one or more of the following information to a processor in the intelligent vehicle in a wireless transmission manner:
a sound signal collected by the microphone, the position attribute of the microphone, the connection status between the microphone and the microphone base, the type attribute of the microphone, a model of the microphone, or a serial number of the microphone.

The position attribute indicates the position of the microphone in the intelligent vehicle or relative to the intelligent vehicle, the connection status is a wired connection state or a wireless connection state, and the type attribute indicates the function type of the microphone.

In this application, the microphone can directly implement communication with the processor in the vehicle in a wireless transmission manner, without a relay node. This improves communication efficiency.

In a possible implementation, when the microphone and the microphone base are in a wired connection state, the microphone base supplies power to the microphone; or when the microphone and the microphone base are in a wireless connection state, the battery in the microphone supplies power to the microphone.

In this application, power supply to the microphone is flexible, and is not limited by a connection manner.

In a possible implementation, a fastening component is disposed on the microphone, and the fastening component is configured to fasten the microphone at another position when the microphone and the microphone base are in a wireless connection state.

In this application, when the microphone is in a wireless connection state, the microphone can be fastened at a position closer to the user (for example, a position close to the mouth or an ear) through the fastening component, to improve use performance of the microphone. Alternatively, the microphone can be fastened to a mike handle or a head-mounted microphone bracket through the fastening component, to extend purposes of the microphone, for example, karaoke or making a call.

In a possible implementation, an audio interface is disposed on the microphone, and the audio interface is configured to connect to an external microphone unit.

Optionally, the microphone is configured to: when it is detected that the external microphone unit is connected, suspend use of a built-in microphone unit of the microphone, and use the external microphone unit.

In this application, an external microphone unit of the microphone can be extended, to meet a requirement of the user on microphone unit performance, and improve user experience.

According to a second aspect, this application provides a microphone base used in an intelligent vehicle. The microphone base is fastened to the intelligent vehicle, the microphone base is configured to pair with a microphone, and the microphone is configured to cooperatively implement voice interaction in the intelligent vehicle.

When the microphone base is in contact connection to the microphone, the microphone base and the microphone are in a wired connection state; and when the microphone is separated from the microphone base, the microphone base and the microphone are in a wireless connection state.

Optionally, the microphone base includes one or more of the following components: a wireless chip, a wireless transceiver module, an MCU, an indicator, a circuit board, a second circuit connector, a second structural connector, a housing, and a third structural connector.

The second circuit connector is configured to implement circuit connection between the microphone base and the microphone.

The second structural connector is configured to implement structural connection between the microphone base and the microphone.

The third structural connector is configured to implement structural connection between the microphone base and the intelligent vehicle.

Optionally, that the microphone base is in contact connection to the microphone includes: The microphone base is in plug-in connection, magnetic connection, snap-fit connection, knob connection, or interference fit connection to the microphone.

In a possible implementation, when the microphone base is paired with the microphone, the microphone base is configured to determine a connection status between the microphone base and the microphone, where the connection status is a wired connection state or a wireless connection state.

In a possible implementation, when the microphone base is paired with the microphone, the microphone inherits a type attribute of the microphone base, and the type attribute indicates function types of the microphone base and the microphone.

In a possible implementation, the type attribute indicates that the function types of the microphone base and the microphone are a sound pickup microphone type; or the type attribute indicates that the function types of the microphone base and the microphone are an active noise cancellation microphone type.

In a possible implementation, when the microphone base is paired with the microphone, position attributes of the microphone and the microphone base are the same, and the position attributes indicate positions of the microphone base and the microphone in the intelligent vehicle or relative to the intelligent vehicle.

In a possible implementation, when the microphone base and the microphone are in a wireless connection state, a position attribute of the microphone is determined based on a wireless positioning technology, and the position attribute indicates a position of the microphone in the intelligent vehicle or relative to the intelligent vehicle.

In a possible implementation, after the microphone base is paired with the microphone, the microphone base is further configured to:
disconnect the pairing with the microphone; and
pair with a microphone other than the microphone.

In a possible implementation, the microphone base is configured to receive information from the microphone and send the information to a processor in the intelligent vehicle.

In a possible implementation, the information includes one or more of the following:
a sound signal collected by the microphone, the position attribute of the microphone, the connection status between the microphone and the microphone base, the type attribute of the microphone, a model of the microphone, or a serial number of the microphone.

The position attribute indicates the position of the microphone in the intelligent vehicle or relative to the intelligent vehicle, the connection status is a wired connection state or a wireless connection state, and the type attribute indicates the function type of the microphone.

In a possible implementation, when the microphone base and the microphone are in a wired connection state, the microphone base supplies power to the microphone; or
when the microphone base and the microphone are in a wireless connection state, a battery in the microphone supplies power to the microphone.

The microphone base is configured to cooperate with the microphone in the first aspect. For specific beneficial effects, refer to the corresponding descriptions in the first aspect. Details are not described herein again.

According to a third aspect, this application provides a signal processing method. The method includes:
A processor in an intelligent vehicle receives and processes information from a microphone module, where the microphone module includes a microphone and a microphone base, the microphone is the microphone according to any one of the possible implementations of the first aspect, and the microphone base is the microphone base according to any one of the possible implementations of the second aspect.

Optionally, that a processor in an intelligent vehicle receives information from a microphone module includes: The processor receives one or more of the following information from the microphone or the microphone base:
a sound signal collected by the microphone, a position attribute of the microphone, a connection status between the microphone and the microphone base, a type attribute of the microphone, a model of the microphone, or a serial number of the microphone.

The position attribute indicates a position of the microphone in the intelligent vehicle or relative to the intelligent vehicle, the connection status is a wired connection state or a wireless connection state, and the type attribute indicates a function type of the microphone.

In this application, the processor cooperates to process information from the microphone in the first aspect and the microphone base in the second aspect. This effectively extends an application scenario of the microphone, optimizes use performance of the microphone, and improves application effect of the microphone. For example, corresponding processing can be performed, based on the connection status between the microphone and the base, on the sound signal collected by the microphone. For example, the processor can correspondingly respond, based on the position attribute of the microphone, to the sound information collected by the microphone.

In a possible implementation, the information includes the sound signal collected by the microphone and the position attribute of the microphone; the sound signal indicates to control a first component in the intelligent vehicle; and the position attribute of the microphone indicates that the microphone is located at a first position in the intelligent vehicle; and
that a processor processes information from a microphone module includes: The processor controls, based on the sound signal and the position attribute, a first component that is in the intelligent vehicle and that corresponds to the first position.

In this application, the processor in the vehicle correspondingly responds, based on the position attribute of the microphone, to the sound information collected by the microphone. For example, the microphone is located at a position of a front passenger, and the microphone collects a voice control instruction for instructing to open a vehicle window. In this case, the processor can control, based on the position of the microphone, to open only a vehicle window of the front passenger. According to this application, accurate voice control can be implemented, and user experience can be improved.

In a possible implementation, the information includes the connection status between the microphone and the microphone base; and the connection status indicates that the microphone and the microphone base are wirelessly connected; and
that a processor processes information from a microphone module includes: The processor controls, based on the wireless connection state, the intelligent vehicle to enter a preset sound signal processing mode.

Optionally, when the microphone is a sound pickup microphone and is in an application scenario of making a call, the preset sound signal processing mode is a privacy call mode; or
when the microphone is a sound pickup microphone and is in an application scenario of human-machine voice interaction, the preset sound signal processing mode is a quiet voice interaction mode; or
when the microphone is a sound pickup microphone and is in an application scenario of singing, the preset sound signal processing mode is a singing mode; or
when the microphone is an active noise cancellation microphone, the preset sound signal processing mode is an active noise cancellation mode.

In this application, the processor can correspondingly process, based on the specific connection status and a specific application scenario, the sound signal collected by the microphone, to improve user experience.

In a possible implementation, the information includes the sound signal collected by the microphone, the position attribute of the microphone, and the type attribute of the microphone; the position attribute indicates that the microphone is located outside the intelligent vehicle; and the type attribute of the microphone indicates that the microphone is a sound pickup microphone; and
that a processor processes information from a microphone module includes: The processor performs noise cancellation processing and/or external voice response processing on the sound signal based on the position attribute and the type attribute, where the external voice response processing is responding to the sound signal as an external voice signal of the intelligent vehicle.

In a possible implementation, the information includes the position attribute of the microphone and the type attribute of the microphone; the position attribute indicates that the microphone is located outside the intelligent vehicle; and the type attribute of the microphone indicates that the microphone is an active noise cancellation microphone; and
that a processor processes information from a microphone module includes: The processor suspends an active noise cancellation function of the microphone based on the position attribute and the type attribute.

In this application, the processor performs different response processing for different types of microphones based on a case in which the microphone is located outside the vehicle, optimizing vehicle performance and enriching purposes of the microphone.

In a possible implementation, the information includes a first position attribute of the microphone and a first sound signal collected by the microphone, and includes a second position attribute of another microphone and a second sound signal collected by the another microphone; and the first position attribute and the second position attribute indicate that a distance between positions of the two microphones is less than a preset distance; and
that a processor processes information from a microphone module includes: The processor combines the first sound signal and the second sound signal for processing; or the processor selects one of the first sound signal and the second sound signal as a sound signal for processing.

In this application, the processor can implement special sound signal processing based on the position attribute of the microphone, optimizing vehicle performance.

According to a fourth aspect, this application provides a microphone system used in an intelligent vehicle. The microphone system includes one or more microphone modules, each microphone module includes a microphone and a microphone base, the microphone is the microphone according to any one of the possible implementations of the first aspect, and the microphone base is the microphone base according to any one of the possible implementations of the second aspect.

In a possible implementation, the microphone system further includes a processor, and the processor is configured to implement the method according to any one of the possible implementations of the third aspect.

According to a fifth aspect, this application provides a vehicle. The vehicle includes a microphone system, and the microphone system is the microphone system according to any one of the possible implementations of the fourth aspect.

According to a sixth aspect, this application provides a computer-readable storage medium. The computer-readable storage medium stores a computer program, and when the computer program is executed by a processor, the method according to any one of the possible implementations of the third aspect is implemented.

According to a seventh aspect, this application provides a computer program product. When the computer program product is executed by a processor, the method according to any one of the possible implementations of the third aspect is performed.

The solutions provided in the fourth aspect to the seventh aspect are used to implement or cooperate to implement the method correspondingly provided in the first aspect, the second aspect, or the third aspect, and therefore, can achieve beneficial effects the same as or corresponding to those in the first aspect, the second aspect, or the third aspect. Details are not described herein again.

In conclusion, in this application, the microphone in the intelligent vehicle is connected to the base in a detachable manner, so that the microphone can be picked up for use when needed, to optimize use performance of the microphone and improve application effect of the microphone. For example, an interior sound pickup microphone can be picked up to approach a human mouth, to improve quality of a collected sound signal. For example, an active noise cancellation microphone in the vehicle can be picked up to approach a human ear, to improve effect of active noise cancellation. For example, because the microphone can be separated from the base, there is no need to dispose a microphone outside the vehicle, and the microphone inside the vehicle can be taken out of the vehicle for use, to implement a human-machine voice interaction function outside the vehicle or a function of communication between the inside and the outside of the vehicle. Usage of an exterior microphone is low. In addition, if a microphone is disposed outside the vehicle, resistance to high and low temperatures, rain, wind, frost, and dust need to be considered. Therefore, a special structure design needs to be introduced, resulting in an increase in costs. However, according to this application, a microphone does not need to be disposed outside the vehicle. This can reduce costs, and improve usage of the microphone in the vehicle. For example, the interior sound pickup microphone can be further picked up and used as a karaoke mike, further extending purposes of the microphone. For example, when the microphone is in a wireless connection state, a sound signal processing mode in a specific scenario can be further triggered, to improve user experience.

In a possible implementation of this application, when the microphone is in a wireless connection state, the processor in the vehicle can respond, based on a current position of the microphone, to the voice control instruction collected by the microphone. For example, the microphone is located at the position of a front passenger, and the microphone collects the voice control instruction for instructing to open the vehicle window. In this case, the processor can control, based on the position of the microphone, to open only a vehicle window of the front passenger. According to this application, accurate voice control can be implemented, and user experience can be improved.

In a possible implementation of this application, the plurality of microphone modules disposed in the vehicle are designed in a standardized manner, and the microphone can be paired with any microphone base in the vehicle for use. The microphone base in the vehicle can also be paired with any one of the plurality of microphones for use. Use flexibility of the microphone is high. This standardized design also reduces costs of design, production, installation, maintenance, and management of a plurality of products. This facilitates use of the user and greatly improves user experience.

In a possible implementation of this application, the external microphone unit of the microphone can be extended, to meet the requirement of the user on microphone unit performance, extend more application scenarios, and improve user experience.

### BRIEF DESCRIPTION OF DRAWINGS

FIG. 1 is a diagram of an application scenario according to an embodiment of this application;
FIG. 2 is a diagram of a structure of a microphone module according to an embodiment of this application;
FIG. 3 is a diagram of a structure of a microphone according to an embodiment of this application;
FIG. 4A and FIG. 4B are diagrams of microphone extension applications according to an embodiment of this application;
FIG. 5 is a diagram of a structure of a microphone base according to an embodiment of this application;
FIG. 6A to FIG. 6H are diagrams of communication manners between a microphone, a base, and a processor according to an embodiment of this application;
FIG. 7 is a diagram of distribution of microphones in a vehicle according to an embodiment of this application; and
FIG. 8 is a schematic flowchart of a signal processing method according to an embodiment of this application.

### DESCRIPTION OF EMBODIMENTS

The following describes embodiments of this application with reference to the accompanying drawings.

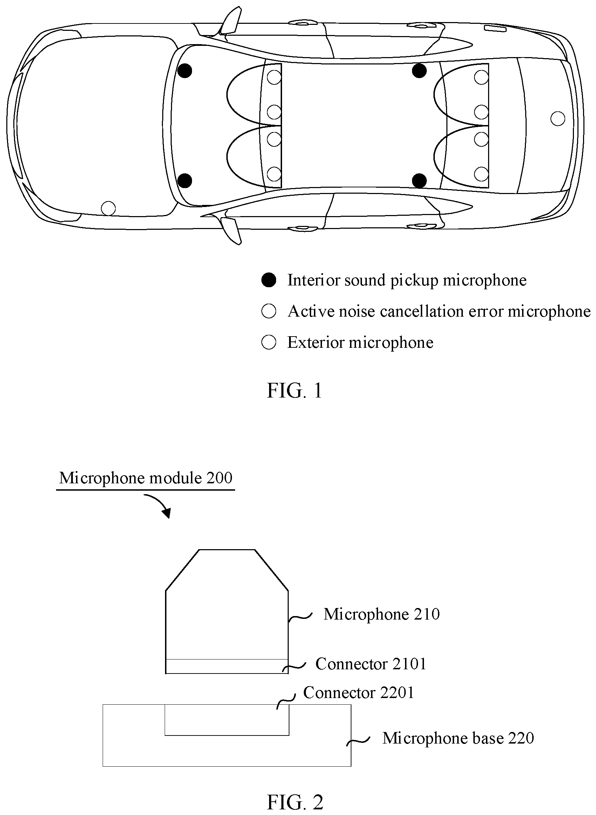

FIG. 1 shows a possible application scenario according to an embodiment of this application by using a vehicle as an example. For example, the vehicle can be an intelligent vehicle. It can be learned from FIG. 1 that the vehicle can include a plurality of vehicle-mounted microphones. The vehicle-mounted microphone further includes several types: an interior sound pickup microphone, an active noise cancellation microphone, and an exterior microphone.

There can be a plurality of interior sound pickup microphones, configured to cooperatively implement functions such as human-machine voice interaction in the vehicle, remote calls, calls between front and rear rows in the vehicle, or singing (for example, a karaoke scenario) in the vehicle. The interior sound pickup microphones can be distributed at any position in the vehicle, for example, can be distributed in places (for example, a vehicle roof, a vehicle door, or a safety belt) that are relatively close to a human mouth on each seat in the vehicle.

There can also be a plurality of active noise cancellation microphones, configured to monitor a noise condition and better implement active noise cancellation effect on a sound signal. The active noise cancellation microphones can be distributed at any position in the vehicle, for example, can be distributed in places (for example, near a headrest) that are relatively close to a human ear on each seat.

There can also be a plurality of exterior microphones, and the exterior microphones are usually configured to cooperatively implement functions such as human-machine voice interaction outside the vehicle or calls between the inside and outside of the vehicle (when doors and windows are closed). The exterior microphones can be distributed at any position outside the vehicle, for example, can be distributed on a trunk lid or a hood of the vehicle.

FIG. 1 merely shows positions and quantities of the several types of microphones as an example, and does not constitute a limitation on this embodiment of this application. In a specific implementation, a quantity of each type of microphones in the vehicle and positions of the microphones can be set based on a specific requirement. This is not limited in embodiments of this application.

Based on the foregoing descriptions, the microphone in the vehicle is disposed at a specific fixed position, which is likely to cause relatively poor quality of a signal collected by the microphone. Specifically, for the sound pickup microphone, due to a relatively large human activity range, it cannot be ensured that the sound pickup microphone is always close to a human mouth. When the sound pickup microphone is relatively far away from the mouth, quality of a sound signal collected by the sound pickup microphone is relatively poor. An interference sound source or a noise source (for example, a speaker, air conditioner noise, high-speed traveling noise, wind noise from an opened vehicle window, or a multi-person chat) in the vehicle also affects the quality of the collected sound signal. During arrangement of the sound pickup microphone, interference of structures such as a vehicle window, a sun visor, or a side air curtain needs to be avoided. As a result, the sound pickup microphone cannot be disposed near a human mouth, and the collected sound signal is also affected. Similarly, the active noise cancellation microphone is also affected by a relatively large human activity range or constraints of the structures in the vehicle or the like, and cannot accurately collect noise information near a human ear. As a result, noise cancellation effect of an active noise cancellation system is poor.

However, because the exterior microphone is disposed outside the vehicle, resistance to high and low temperatures, rain, wind, frost, and dust need to be considered in design. A special structure design needs to be introduced. Therefore, technical difficulty is high, costs are high, and usage is relatively low.

Based on the problems, an embodiment of this application provides a microphone module, to alleviate the problems to some extent or resolve the problems.

It can be understood that the microphone module provided in this embodiment of this application can be used in an intelligent device like an intelligent vehicle, an intelligent terminal, a smart home, or an intelligent manufacturing device. For example, the intelligent terminal can include a smartphone, a tablet personal computer (tablet personal computer, Tablet PC), a handheld computer, a wearable electronic device, or a personal computer (personal computer, PC). The smart home can include, for example, a smart speaker, a smart air conditioner, a smart refrigerator, a smart washing machine, a robotic vacuum cleaner, or a smart door lock. The smart manufacturing device can include, for example, an intelligent device like an airplane, a ship, or a lathe in the transportation field and the industrial field. In a specific implementation, the microphone module provided in this embodiment of this application can be applied to an application scenario like a mobile Internet (mobile internet, MI), industrial control (industrial control), self-driving (self-driving), transportation safety (transportation safety), internet of things (internet of things, IoT), a smart city (smart city), or a smart home (smart home). A specific applicable device and application scenario are not limited in embodiments of this application.

For example, FIG. 2 is a composition diagram of a microphone module 200. The microphone module 200 includes a microphone 210 and a microphone base 220. The microphone 210 includes a connector 2101. The microphone base 220 includes a connector 2201. The microphone base 220 can be fastened to the intelligent device.

For example, if the intelligent device is the vehicle shown in FIG. 1, the microphone 210 can be an interior sound pickup microphone, an active noise cancellation microphone, or an exterior microphone. For example, in a specific implementation, the microphone base can be fastened at a position of the microphone described in FIG. 1.

The microphone 210 is connected to the microphone base 220 in a detachable manner. That is, the microphone 210 can be fastened to the microphone base 220, or the microphone 210 can be separated from the microphone base 220. When the microphone 210 is placed on the microphone base 220, the connector 2101 on the microphone 210 can be interconnected to the connector 2201 on the microphone base 220, to complete fastening between the microphone 210 and the microphone base 220. When the microphone 210 is separated from the microphone base 220, an interconnection relationship between the connector 2101 and the connector 2201 can be removed, to separate the microphone 210 from the microphone base 220.

In a possible example, that the microphone 210 is connected to the microphone base 220 in a detachable manner can be: The microphone 210 is connected to the microphone base 220 in a magnetic manner. In this case, for example, the connector 2101 and the connector 2201 can include magnets, and the magnets in the two connectors can attract each other. Alternatively, one of the connector 2101 and the connector 2201 includes a magnet, and the other includes an iron plate.

In a possible example, that the microphone 210 is connected to the microphone base 220 in a detachable manner can be: The microphone 210 is connected to the microphone base 220 in a snap-fit manner. In this case, the connector 2101 and the connector 2201 include interlocking mechanical parts. For example, the connector 2101 and the connector 2201 can be connectors of a external line return (XLR) interface type. A specific structure of a snap-fit connector is not limited in embodiments of this application.

In a possible example, that the microphone 210 is connected to the microphone base 220 in a detachable manner can be: The microphone 210 is connected to the microphone base 220 in a knob manner. In this case, the connector 2101 and the connector 2201 include a knob fastening mechanical part. For example, the connector 2101 and the connector 2201 can be connectors of a Bayonet Neill-Concelman (Bayonet Neill-Concelman, BNC) interface type, or can be connectors of a bolt interface type. A specific structure of a knob connector is not limited in embodiments of this application.

In a possible example, that the microphone 210 is connected to the microphone base 220 in a detachable manner can be: The microphone 210 is connected to the microphone base 220 in an interference fit manner. In this case, a connection between the connector 2101 and the connector 2201 is formed through an interference fit that utilizes different relative positional relationships of tolerance bands of combined holes and shafts. For example, for the interference fit connection manner, refer to a connection manner of a 3.5 mm audio interface. In a specific implementation, a specific structure of a specific interference fit connector is not limited in embodiments of this application.

It can be understood that the described structural connection manners between the microphone 210 and the microphone base 220 are merely examples, and do not constitute a limitation on this embodiment of this application. In a specific implementation, the microphone 210 and the microphone base 220 can alternatively be connected to each other in another pluggable manner or the like. This is not limited in embodiments of this application.

In a possible embodiment, the connector 2101 includes a structural connector A and a circuit connector A. The connector 2201 includes a structural connector B and a circuit electrical connector B. The structural connector A and the structural connector B are connectors that are paired with each other, and are configured to implement structural fastening between the microphone 210 and the microphone base 220. The circuit connector A and the circuit connector B are also connectors that are paired with each other, and are configured to implement circuit connection between the microphone 210 and the microphone base 220. For example, in a specific implementation, when structural connection is implemented between the microphone 210 and the microphone base 220 through the connector 2101 and the connector 2201, circuit connection is also implemented.

It can be understood that, in the microphone module shown in FIG. 2, shapes of the microphone 210 and the microphone base 220 are merely examples, and do not constitute a limitation on this embodiment of this application. The microphone 210 and the microphone base 220 can be in any shape. This is not limited in embodiments of this application.

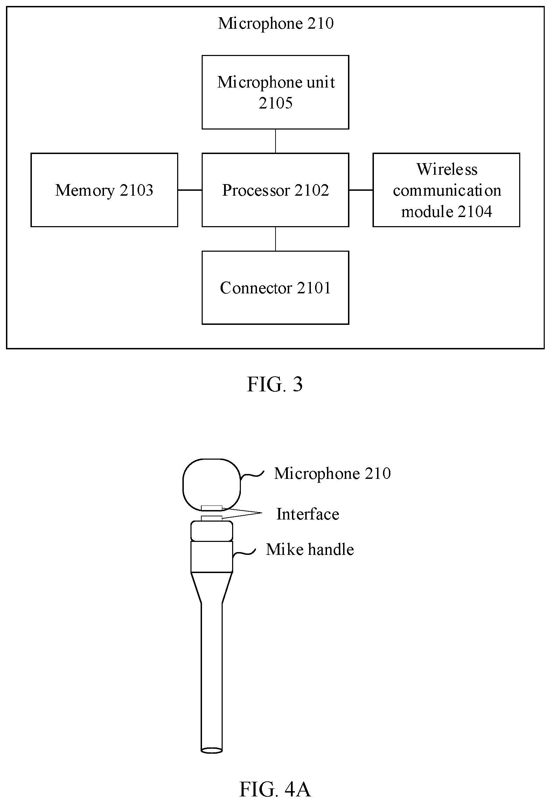

In a possible implementation, for example, FIG. 3 is a diagram of a structure of the microphone 210. It can be learned that the microphone 210 includes the connector 2101, a processor 2102, a memory 2103, a wireless communication module 2104, and a microphone unit 2105. The connector 2101 is the connector 2101 shown in FIG. 2, and is configured to connect to a microphone base 220.

The processor 2102 is a circuit having a signal processing capability. In an implementation, the processor 2102 can be a circuit having a capability of instruction reading and running, for example, can be a central processing unit (central processing unit, CPU), a microprocessor (microprocessor unit, MPU), a microcontroller unit (microcontroller unit, MCU), or a digital signal processor (digital signal processor, DSP). In another implementation, the processor 2102 can implement a specific function by using a logical relationship of a hardware circuit, and the logical relationship of the hardware circuit is fixed or reconfigurable. For example, the processor 2102 is a hardware circuit implemented by an application-specific integrated circuit (application-specific integrated circuit, ASIC) or a programmable logic device (programmable logic device, PLD), for example, a field programmable logic gate array (field programmable gate array, FPGA). In another implementation, the processor 2102 can be a combination of the following: the CPU, MPU, MCU, DSP, ASIC, PLD, or the like. This is not limited in embodiments of this application.

The memory 2103 is configured to store a computer program, data, or the like. The memory 2103 can include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The wireless communication module 2104 can include a wireless communication chip and a wireless transceiver, and is configured to implement wireless communication with the microphone base 220 and/or the processor (for example, an audio processor) in the intelligent device.

The microphone unit 2105 is an energy conversion device that converts a sound signal into an electrical signal, and can also be referred to as an acoustic transducer.

In a possible implementation, the microphone 210 can further include components such as a battery, one or more indicators, and a housing. The battery can be configured to supply power to the microphone 210.

For example, when the microphone 210 is separated from the microphone base 220, the microphone 210 is charged by using the battery carried by the microphone 210. After the microphone 210 is fastened to the microphone base 220 through the connector 2101 and the connector 2201, circuit connection is also implemented. In this case, power can be supplied to the microphone 210 by using the microphone base 220. Optionally, the microphone base 220 can further charge the battery in the microphone 210.

The indicator in the microphone can be configured to indicate a working state, a paired state, a battery level, or the like of the microphone 210. For example, if the microphone 210 is in a working state, a corresponding indicator turns on. For example, if the microphone 210 is successfully paired with the microphone base 220, a corresponding indicator in the microphone 210 and an indicator of the microphone base 220 simultaneously turn on or display a same color. For example, if the battery level is lower than a preset battery level, a corresponding indicator turns on, to generate an alarm.

In a possible implementation, a fastening component can be disposed on the microphone 210. The fastening component is configured to fasten the microphone 210 at another position when the microphone 210 is separated from the microphone base 220. For example, the fastening component can be an alligator clip, a hook, or a pin. When the microphone 210 is separated from the microphone base 220, the microphone 210 can be fastened, through the fastening component, at a position that is close to a human mouth or a human ear, like a collar, a safety belt, or a glasses temple.

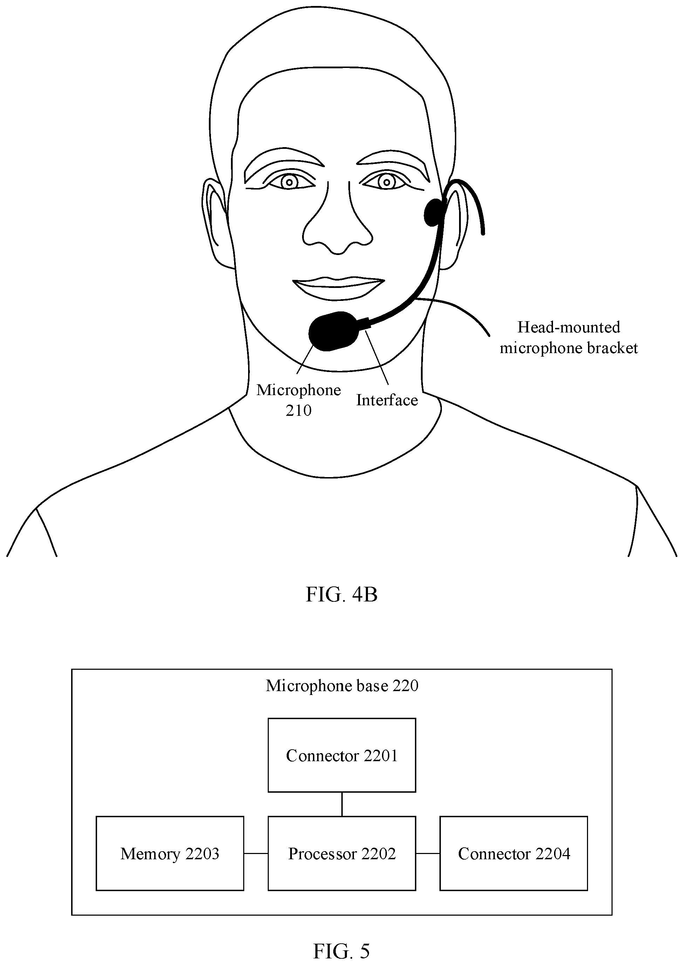

In a possible implementation, the fastening component can be an interface configured to fasten to a dedicated auxiliary accessory. The dedicated auxiliary accessory can be, for example, a mike handle or a head-mounted microphone bracket. For example, the microphone 210 can be fastened to the mike handle through the interface. Refer to FIG. 4A. Optionally, after the microphone 210 is fastened to the mike handle through the interface, circuit connection to the mike handle is further implemented. Alternatively, for example, the microphone 210 can be fastened to the head-mounted microphone bracket through the interface. Refer to FIG. 4B. Optionally, after the microphone 210 is fastened to the head-mounted microphone bracket through the interface, circuit connection to the head-mounted microphone bracket is further implemented.

In a possible implementation, an audio interface can be disposed on the microphone 210. The audio interface is configured to connect to an external microphone unit. For example, the external microphone unit can be a microphone unit having better performance or having a special function. For example, the external microphone unit can be a directional microphone unit or a windproof microphone unit. For example, in a specific implementation, when detecting that the external microphone unit is connected, the microphone 210 can suspend use of a built-in microphone unit of the microphone 210, and then use the connected external microphone unit instead.

It can be understood that the structure of the microphone described above is merely an example, and does not constitute a limitation on this embodiment of this application.

In a possible implementation, for example, FIG. 5 is a diagram of a structure of the microphone base 220. It can be learned that the microphone base 220 includes the connector 2201, a processor 2202, a memory 2203, and a connector 2204. The connector 2201 is the connector 2201 shown in FIG. 2, and is configured to connect to the microphone 210.

The processor 2202 is a circuit having a signal processing capability. In an implementation, the processor 2202 can be a circuit having a capability of instruction reading and running, for example, a CPU, an MPU, an MCU, or a DSP. In another implementation, the processor 2202 can implement a specific function by using a logical relationship of a hardware circuit, and the logical relationship of the hardware circuit is fixed or reconfigurable. For example, the processor 2202 is a hardware circuit implemented by an ASIC or a PLD, for example, can be an FPGA. In another implementation, the processor 2202 can be a combination of the following: the CPU, MPU, MCU, DSP, ASIC, PLD, or the like. This is not limited in embodiments of this application.

The memory 2203 is configured to store a computer program, data, or the like. The memory 2203 can include but is not limited to a RAM, a ROM, an EPROM, a CD-ROM, or the like.

The connector 2204 is configured to implement fastening between the microphone base 220 and the intelligent device. In a possible implementation, the connector 2204 can further implement circuit connection between the microphone base 220 and the intelligent device.

In a possible embodiment, the microphone base 220 can further include a wireless communication module. The wireless communication module can include a wireless communication chip and a wireless transceiver, and is configured to implement wireless communication with the microphone 210 and/or the processor (for example, an audio processor) in the intelligent device.

In a possible implementation, the microphone base 220 can further include components such as one or more indicators, and a housing. The indicator can be configured to indicate a working state, a paired state, or the like of the microphone base 220. For example, if the microphone base 220 is in a working state, a corresponding indicator turns on. For example, if the microphone base 220 is successfully paired with the microphone 210, a corresponding indicator in the microphone base 220 and an indicator of the microphone 210 simultaneously turn on or display a same color.

In a possible implementation, the microphone base 220 can be electrically connected to the intelligent device, or the microphone base 220 is only structurally fastened to the intelligent device, and is not electrically connected to the intelligent device. When the microphone base 220 is electrically connected to the intelligent device, a power supply system in the intelligent device supplies power to the microphone base 220. When the microphone base 220 is not electrically connected to the intelligent device, the microphone base 220 can carry a battery, and the battery supplies power to the microphone base 220. Alternatively, the microphone base 220 is only an apparatus that is configured to structurally fasten to the microphone 210, and does not have a circuit. Therefore, the microphone base 220 does not need to be powered.

It can be understood that the structure of the microphone base described above is merely an example, and does not constitute a limitation on this embodiment of this application.

The following describes, by using examples, implementations of interactive communication between the microphone 210, the microphone base 220, and the intelligent device. For example, in a specific implementation, interactive communication between the microphone 210 and/or the microphone base 220 and the intelligent device is mainly interactive communication between the microphone 210 and/or the microphone base 220 and the processor in the intelligent device. For example, the processor in the intelligent device can be any one or a combination of the following: an audio processor, a CPU, an MPU, an MCU, a DSP, an ASIC, a PLD, or the like. This is not limited in embodiments of this application. Alternatively, if the intelligent device is the vehicle, the processor can be a domain controller in the vehicle, for example, can be a vehicle integration unit (vehicle integration unit, VIU), a vehicle domain controller (vehicle domain controller, VDC), a cockpit domain controller (cockpit domain controller, CDC), or a mobile data center (mobile data center, MDC) controller. For ease of subsequent description, the processor in the intelligent device is referred to as a target processor below.

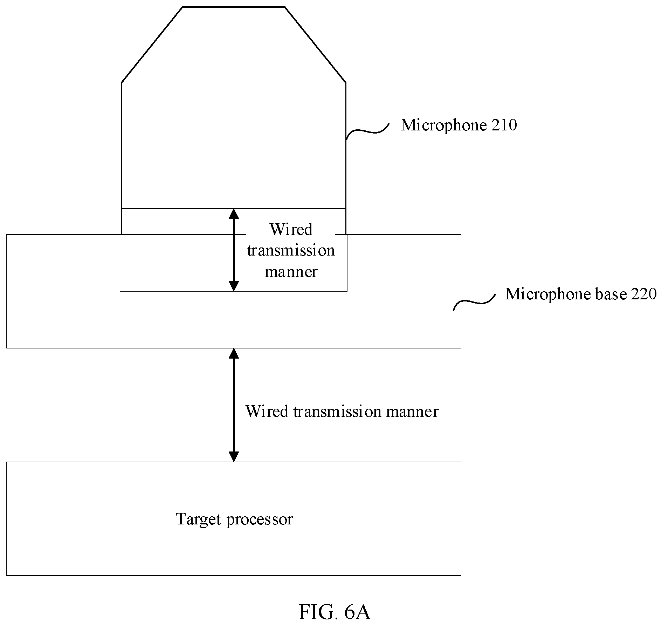

In a possible embodiment, the connector 2101 in the microphone 210 and the connector 2201 in the microphone base 220 can be configured to implement structural fastening and circuit connection. In addition, the microphone base 220 can implement wired electrical connection or wireless electrical connection to the target processor. In this case, for example, for communication manners between the microphone 210, the microphone base 220, and the target processor, refer to FIG. 6A to FIG. 6H.

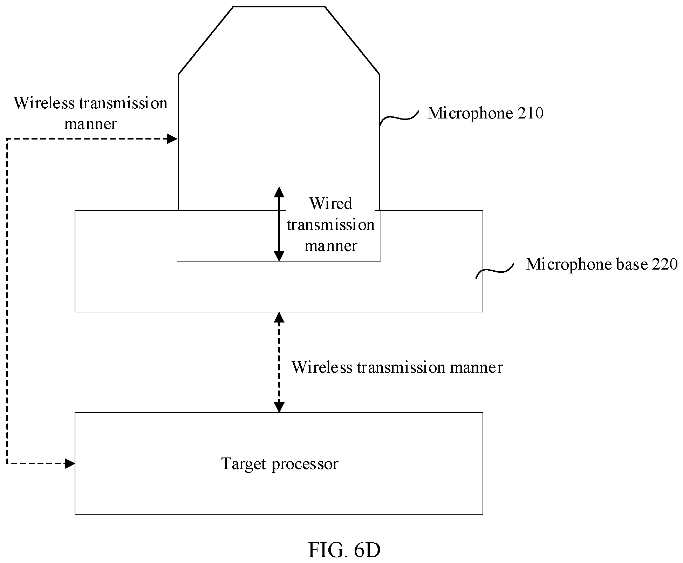

In FIG. 6A to FIG. 6D, the microphone 210 is fastened to the microphone base 220 through the connector, and a wired electrical connection is implemented between the microphone 210 and the microphone base 220. In this case, communication can be implemented between the microphone 210 and the microphone base 220 in a wired transmission manner. For differences between FIG. 6A and FIG. 6D, refer to the following descriptions.

In FIG. 6A, communication can also be implemented between the microphone base 220 and the target processor in a wired transmission manner. Then, communication between the microphone 210 and the target processor can be transferred by using the microphone base 220 as an intermediary. To be specific, the microphone 210 can first send a signal to the microphone base 220, and then the microphone base 220 sends the received signal to the target processor. On the contrary, the target processor can first send a signal to the microphone base 220, and then the microphone base 220 sends the received signal to the microphone 210.

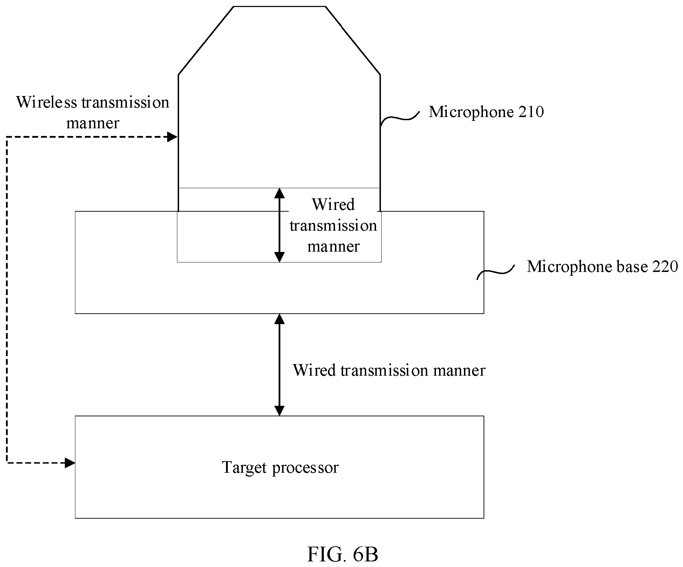

In FIG. 6B, communication can also be implemented between the microphone base 220 and the target processor in a wired transmission manner. In addition, the microphone 210 can establish a wireless connection to the target processor, and communication between the microphone 210 and the target processor can be implemented in a wireless transmission manner.

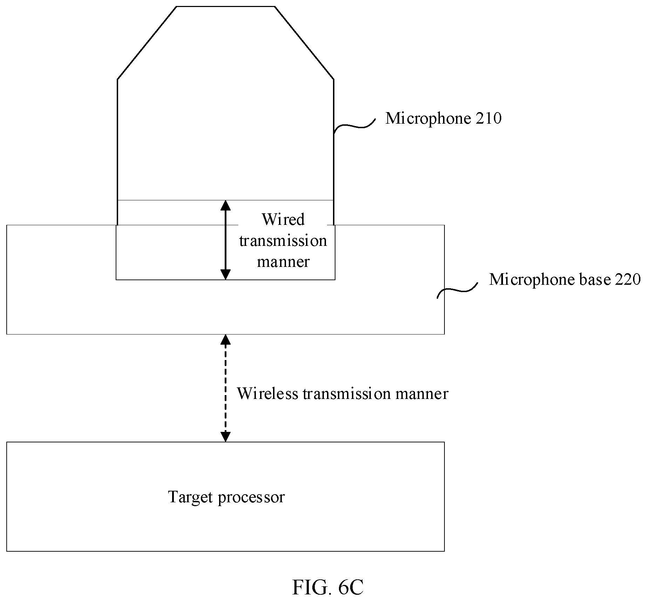

In FIG. 6C, the microphone base 220 can establish a wireless connection to the target processor, to implement communication in a wireless transmission manner. Then, communication between the microphone 210 and the target processor can be transferred by using the microphone base 220 as an intermediary. To be specific, the microphone 210 can first send a signal to the microphone base 220, and then the microphone base 220 sends the received signal to the target processor. On the contrary, the target processor can first send a signal to the microphone base 220, and then the microphone base 220 sends the received signal to the microphone 210.

In FIG. 6D, the microphone base 220 can establish a wireless connection to the target processor, to implement communication in a wireless transmission manner. Then, the microphone 210 can establish a wireless connection to the target processor, and communication between the microphone 210 and the target processor can be implemented in a wireless transmission manner.

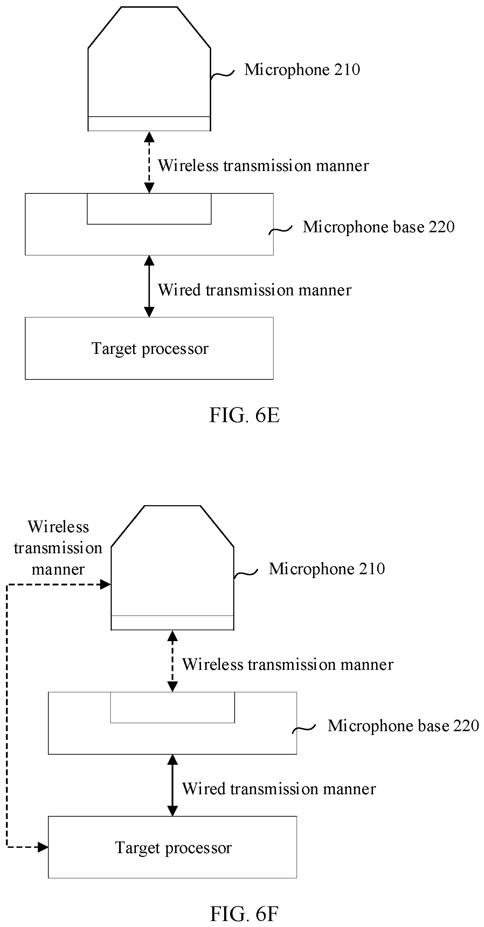

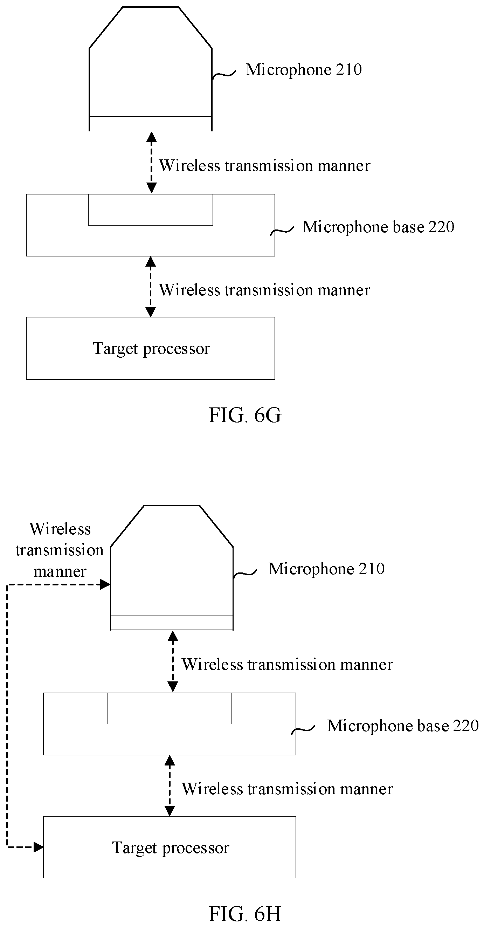

In FIG. 6E to FIG. 6H, the microphone 210 is separated from the microphone base 220, and a wireless connection can be established between the microphone 210 and the microphone base 220, to implement communication in a wireless transmission manner. In addition, for manners in which the microphone base 220 and the microphone 210 in FIG. 6E separately communicate with the target processor, refer to the description in FIG. 6A. Details are not described herein again. For manners in which the microphone base 220 and the microphone 210 in FIG. 6F separately communicate with the target processor, refer to the description in FIG. 6B. Details are not described herein again. For manners in which the microphone base 220 and the microphone 210 in FIG. 6G separately communicate with the target processor, refer to the description in FIG. 6C. Details are not described herein again. For manners in which the microphone base 220 and the microphone 210 in FIG. 6H separately communicate with the target processor, refer to the description in FIG. 6D. Details are not described herein again.

For example, the wireless transmission manner can be a wireless communication manner implemented by using a SparkLink (SparkLink) technology, a long term evolution (long term evolution, LTE) network, a fifth generation mobile communication technology (5th Generation Mobile Communication Technology, 5G), a wireless local area network (for example, Wi-Fi), Bluetooth (Bluetooth, BT), Zigbee (Zigbee), or an in-vehicle short-distance wireless communication network.

In a possible implementation, information sent by the microphone 210 to the target processor can include one or more of the following: a sound signal collected by the microphone, the position attribute of the microphone, the connection status between the microphone and the microphone base, a type attribute of the microphone, a model of the microphone, or a serial number of the microphone. The position attribute indicates a position of the microphone in the intelligent vehicle or relative to the intelligent vehicle, the connection status is a wired connection state or a wireless connection state, and the type attribute indicates a function type of the microphone. The information is further described in the following, and is not described herein.

In an implementation, the microphone 210 can first send the information to the microphone base 220 in a wired transmission manner or a wireless transmission manner, and then the microphone base 220 sends the information to the target processor in a wired transmission manner or a wireless transmission manner. In another possible implementation, the microphone 210 can send the information to the target processor in a wireless transmission manner.

It can be understood that the descriptions herein are merely examples, and do not constitute a limitation on this embodiment of this application.

In a possible embodiment, after the microphone 210 is paired with the microphone base 220, interactive communication is performed. For example, when the microphone 210 is electrically connected to the microphone base 220 through the connector, signal interaction is performed between the microphone 210 and the microphone base 220, to complete pairing. For example, after the microphone 210 is electrically connected to the microphone base 220, the microphone 210 sends a pairing request to the microphone base 220. After receiving the request, the microphone base 220 sends, to the microphone 210, an indication signal indicating to agree to pairing, to complete the pairing between the microphone base and the microphone. Alternatively, after the microphone 210 is electrically connected to the microphone base 220, the microphone base 220 sends a pairing request to the microphone 210. After receiving the request, the microphone 210 sends, to the microphone base 220, an indication signal indicating to agree to pairing, to complete the pairing between the microphone base and the microphone. In this implementation, a signal transmission manner between the microphone 210 and the microphone base 220 is a wired transmission manner.

Alternatively, when the microphone 210 is separated from the microphone base 220, pairing between the microphone 210 and the microphone base 220 can be implemented in a wireless transmission manner. For example, the microphone 210 approaches the microphone base 220, the microphone base 220 can sense the microphone 210, and then the microphone base 220 sends a pairing request to the microphone 210 in a wireless transmission manner. After receiving the request, the microphone 210 also sends, to the microphone base 220 in a wireless transmission manner, an indication signal indicating to agree to pairing, to complete the pairing between the microphone base and the microphone. Alternatively, for example, the microphone 210 approaches the microphone base 220, the microphone 210 can sense the microphone base 220, and then the microphone 210 sends a pairing request to the microphone base 220 in a wireless transmission manner. After receiving the request, the microphone base 220 also sends, to the microphone 210 in a wireless transmission manner, an indication signal indicating to agree to pairing, to complete the pairing between the microphone base and the microphone.

In a possible implementation, that the microphone 210 approaches the microphone base 220 can be that the microphone 210 enters a preset area range around the microphone base 220. For example, the preset area range can be an area scope included in a sphere that is centered on the microphone base 220 and whose radius is a preset length. The preset length can be, for example, 3 centimeters, 5 centimeters, 8 centimeters, or 10 centimeters. This is not limited in embodiments of this application. Alternatively, for example, the preset area range can be a fixed position that is preconfigured. The preset area range is not limited in embodiments of this application.

In a possible implementation, after the microphone 210 approaches the microphone base 220 and remains in the preset area range for preset duration, the microphone 210 or the microphone base 220 can send a pairing request to each other. The preset duration can be 2 seconds, 3 seconds, 5 seconds, or the like. This is not limited in embodiments of this application.

In another possible implementation, after the microphone 210 approaches the microphone base 220, a user can trigger the microphone 210 to send a pairing request to the microphone base 220, or the user can trigger the microphone base 220 to send a pairing request to the microphone 210. For example, after the microphone 210 approaches the microphone base 220, the microphone 210 (or the microphone base 220) can send indication information to the target processor, where the indication information indicates that the microphone 210 (or the microphone base 220) can be paired with the microphone base 220 (or the microphone 210). After receiving the indication information, the target processor can display the indication information by using a head unit screen. After viewing the indication information, the user can input an instruction for agreeing to pairing or rejecting pairing. The head unit screen can return the instruction to the target processor. If the instruction indicates to agree to the pairing, the target processor sends, to the microphone 210 or the microphone base 220, a control instruction for controlling the pairing with the microphone 210 or the microphone base 220. If the instruction indicates to not agree to the pairing, the target processor sends a control instruction for rejecting the pairing. The description herein is merely an example, and does not constitute a limitation on this embodiment of this application. A manner in which the user triggers pairing is not limited in embodiments of this application.

In a possible implementation, when the microphone base 220 has been paired with another microphone, after the microphone 210 approaches the microphone base 220, pairing between the microphone 210 and the microphone base 220 is not triggered.

In another possible implementation, when the microphone base 220 has been paired with another microphone, after the microphone 210 approaches the microphone base 220, pairing between the microphone 210 and the microphone base 220 can be triggered. For example, the microphone base 220 disconnects the pairing with the another microphone after sensing that the microphone 210 has been within the preset area range for a time period longer than the preset duration. Then, the pairing with the microphone 210 is established.

In another possible implementation, when the microphone base 220 has been paired with another microphone, the microphone 210 approaches the microphone base 220, to allow the microphone 210 or the microphone base 220 to sense existence of each other, the microphone 210 (or the microphone base 220) can send indication information to the target processor. The indication information indicates that the microphone 210 (or the microphone base 220) can be paired with the microphone base 220 (or the microphone 210). After receiving the indication information, the target processor can display the indication information by using a head unit screen. After viewing the indication information, the user can input an instruction for agreeing to pairing or rejecting pairing. The head unit screen can return the instruction to the target processor. If the instruction indicates to agree to the pairing, the target processor sends, to the microphone 210 or the microphone base 220, a control instruction for controlling the pairing with the microphone 210 or the microphone base 220. Certainly, before the microphone base 220 is paired with the microphone 210, the pairing with the original microphone needs to be disconnected first. If the instruction indicates to not agree to the pairing, the target processor sends a control instruction for rejecting the pairing or does not respond.

In another possible implementation, when the microphone base 220 has been paired with another microphone, after the microphone 210 approaches the microphone base 220, the microphone 210 can still be paired with the microphone base 220. In other words, the microphone base 220 can be paired with a plurality of microphones.

It can be understood that the implementations of the pairing between the microphone 210 and the microphone base 220 are merely examples, and do not constitute a limitation on this embodiment of this application.

In a possible implementation, before the microphone base 220 is paired with the microphone 210, the microphone base 220 can first perform identity authentication on the microphone 210. In a possible implementation, after the microphone base 220 is electrically connected to the microphone 210, or after the microphone base 220 senses the microphone 210 by using a wireless communication technology, the microphone base 220 can obtain authentication information from the microphone 210. Then, the authentication information is compared with authentication information pre-stored in the microphone base. Alternatively, the microphone base 220 sends the obtained authentication information to the target processor, and the target processor compares the authentication information with the pre-stored authentication information. If the authentication information matches the pre-stored authentication information, the authentication succeeds. Further, the microphone base 220 completes pairing with the microphone 210.

For example, the authentication information can be a predefined identifier, a predefined signal value, or the like. Alternatively, the authentication information can be a model and/or a serial number of the microphone 210, or the like. The specific authentication information is not limited in embodiments of this application.

In a possible implementation, if the authentication information is a predefined identifier, signal value, or the like, after the microphone base 220 and the microphone 210 complete authentication or pairing, the microphone base 220 can send the model and/or the serial number of the microphone 210 to the target processor. The model and/or the serial number of the microphone 210 can indicate a specific type of the microphone 210, and can indicate the target processor to perform corresponding processing based on the specific type of the microphone 210. For example, if the model and/or the serial number of the microphone 210 indicate/indicates that the microphone 210 is a directional microphone, the target processor can perform weak crosstalk suppression processing, noise suppression processing, or the like on a sound signal collected by the directional microphone. For example, if the model and/or the serial number of the microphone 210 indicate/indicates that the microphone 210 is a windproof microphone, the target processor can perform weak wind noise suppression processing or the like on a sound signal collected by the windproof microphone.

In a possible implementation, the microphone 210 or the microphone base 220 can determine whether a specific connection status between each other is a wired connection or a wireless connection. For example, when the microphone 210 detects that the connector 2101 is electrically connected to the connector 2201 of the microphone base 220, the microphone 210 can determine that a connection status between the microphone 210 and the microphone base 220 is a wired connection. Alternatively, when the microphone 210 detects that a wireless communication connection is established between the microphone 210 and the microphone base 220, the microphone 210 can determine that the connection status between the microphone 210 and the microphone base 220 is a wireless connection. Similarly, when the microphone base 220 detects that the connector 2201 is electrically connected to the connector 2101 of the microphone 210, the microphone base 220 can determine that the connection status between the microphone base 220 and the microphone 210 is a wired connection. Alternatively, when the microphone base 220 detects that a wireless communication connection is established between the microphone 210 and the microphone base 220, the microphone base 220 can determine that the connection status between the microphone base 220 and the microphone 210 is a wireless connection.

Alternatively, for example, the microphone 210 or the microphone base 220 can determine the specific connection status in a power supply manner. For example, when the microphone base 220 supplies power to the microphone 210, the microphone 210 can determine that the connection status between the microphone 210 and the microphone base 220 is a wired connection. When the battery of the microphone 210 supplies power to the microphone 210, the microphone 210 can determine that the connection status between the microphone 210 and the microphone base 220 is a wireless connection. Similarly, when the microphone base 220 supplies power to the microphone 210, the microphone base 220 can determine that the connection status between the microphone base 220 and the microphone 210 is a wired connection. When the microphone base 220 does not supply power to the microphone 210, the microphone base 220 can determine that the connection status between the microphone base 220 and the microphone 210 is a wireless connection.

Manners of determining the connection status are merely examples, and do not constitute a limitation on this embodiment of this application.

After determining the connection status between the microphone 210 or the microphone base 220, the microphone 210 or the microphone base 220 can send the specific connection status to the target processor. The target processor can perform corresponding specific processing on the received sound signal based on the specific connection status. In this application, the sending the specific connection status to the target processor means sending information indicating the specific connection status to the target processor.

In a possible implementation, after the connection status between the microphone 210 and the microphone base 220 changes, the microphone 210 or the microphone base 220 can redetermine a connection status between the microphone 210 or the microphone base 220. Then, the new connection status is sent to the processor. For example, the microphone 210 and the microphone base 220 are originally in a wired connection state, and when the user holds up the microphone 210 from the microphone base 220, the microphone 210 is separated from the microphone base 220. The microphone 210 establishes a wireless connection to the microphone base 220. Then, the microphone 210 or the microphone base 220 determines that the connection status between each other is a wireless connection state, and sends the wireless connection state to the processor. On the contrary, the microphone 210 and the microphone base 220 are originally in a wireless connection state. When the user puts the microphone 210 back into the microphone base 220, the microphone 210 establishes a wired connection to the microphone base 220. Then, the microphone 210 or the microphone base 220 determines that a connection status between each other is a wired connection state, and sends the wired connection state to the processor.

For example, if the microphone 210 or the microphone base 220 is in a wireless connection state, the target processor can control, based on the wireless connection state, the intelligent device to enter a preset sound signal processing mode. The preset sound signal processing mode can be further determined based on a specific type attribute of the microphone 210 and a corresponding application scenario. For ease of understanding, the following uses an example in which the intelligent device is the vehicle for description.

In a possible implementation, the microphone 210 is a sound pickup microphone, and the microphone 210 is used in an application scenario of making a call. In this case, the target processor can control, based on the received connection status between the microphone 210 and the microphone base 220, namely, a wireless connection state, the vehicle to enter a private call mode, that is, can set a call mode to the private call mode. In the private call mode, the microphone 210 can collect and process a sound signal that is input by the user and whose volume is relatively low. Optionally, in the private call mode, a speaker in the vehicle can also activate a privacy mode. For example, the target processor can locate, based on a position of the microphone 210, a speaker (for example, a headrest speaker) near the position, and control only the nearby speaker to play sound of a call. The description herein is merely an example, and does not constitute a limitation on this embodiment of this application.

In a possible implementation, the microphone 210 is a sound pickup microphone, and the microphone 210 is used in an application scenario of human-machine voice interaction, for example, a scenario in which the microphone 210 receives a voice control instruction of the user for controlling to close a vehicle window or turn on an air conditioner after receiving a wake-up signal of human-machine voice interaction. In this case, the target processor can control, based on that the received connection status between the microphone 210 and the microphone base 220, namely, a wireless connection state, the vehicle to enter a quiet voice interaction mode, that is, can set a human-machine voice interaction mode to the quiet voice interaction mode. In the quiet voice interaction mode, the microphone 210 can collect and process a sound signal that is input by the user and whose volume is relatively low. Optionally, a voice assistant in the vehicle can respond quietly or silently.

In a possible implementation, the microphone 210 is a sound pickup microphone, and the microphone 210 is used in an application scenario of singing, for example, the vehicle enters a singing mode based on an instruction of the user. In this case, the target processor can control, based on the received connection status between the microphone 210 and the microphone base 220, namely, a wireless connection state, the vehicle to enter a karaoke mode. In the karaoke mode, the microphone 210 can collect and process a song signal input by the user. For example, if there are a plurality of microphones 210 in the vehicle, all the plurality of microphones 210 can collect and send the song signal of the user to the target processor for processing, to implement effect of a plurality of people singing karaoke simultaneously. It can be understood that, in another possible implementation, when the connection status between the microphone 210 and the microphone base 220 is a wired connection state, the microphone 210 can also be configured for karaoke. Compared with the karaoke mode in a wireless connection state, the karaoke mode in a wired connection state provides poor effect due to various problems such as howling or sound crosstalk.

In a possible implementation, if the microphone 210 is an active noise cancellation microphone, the target processor controls an active noise cancellation strategy of the vehicle based on the received connection status between the microphone 210 and the microphone base 220. If the connection status between the microphone 210 and the microphone base 220 is a wired connection, because the microphone 210 is far away from a human ear, an error signal of an active noise cancellation system is a signal of the microphone 210, or is obtained through estimation of both the signal of the microphone 210 and another signal (for example, a signal detected visually at a position of a human ear, and another nearby microphone signal). If the connection status between the microphone 210 and the microphone base 220 is a wireless connection, because the microphone 210 is relatively close to a human ear by default, the error signal of the active noise cancellation system is the signal of the microphone 210. If the microphone 210 is actually located near a human ear, active noise cancellation effect in a wireless connection state is better than that in a wired connection state. It can be understood that the active noise cancellation mode can coexist with the private call mode, the quiet voice interaction mode, or the karaoke mode.

It can be understood that the descriptions of the preset sound signal processing mode are merely examples, and do not constitute a limitation on this embodiment of this application.

In a possible implementation, it can be learned from the foregoing descriptions that a plurality of types of microphones can be disposed on the intelligent device, and different types of microphones have different functions. In a specific implementation, because the microphone base 220 is paired with the microphone 210 for use, the microphone base 220 also has a type attribute. Different types of microphone bases 220 are paired with microphones 210 with different functions. That is, after the type attribute of the microphone base 220 is determined, the microphone 210 that is paired with the microphone base 220 inherits the type attribute of the microphone base 220. The vehicle is used as an example of the intelligent device. For example, the type of the microphone 210 includes an interior sound pickup microphone and an active noise cancellation microphone. In this case, the type of the microphone base 220 can also include an interior sound pickup microphone and an active noise cancellation microphone. The type attribute of the microphone base 220 is an interior sound pickup microphone. In this case, the microphone 210 that is paired with the microphone base 220 is an interior sound pickup microphone. The type attribute of the microphone base 220 is an active noise cancellation microphone. In this case, the microphone 210 that is paired with the microphone base 220 is an active noise cancellation microphone.

In a possible implementation, the type attribute of the microphone base 220 can be preconfigured in the microphone base 220, for example, can be burned into the microphone base 220 when firmware burning is performed on the microphone base 220. In another possible implementation, the type attribute of the microphone base 220 can be set by the user. The vehicle is used as an example of the intelligent device. For example, user can set a corresponding type attribute for the microphone base 220 by using a central control screen of the vehicle and store the type attribute. The description herein is merely an example, and a specific manner of determining the type attribute of the microphone base 220 is not limited in this application.

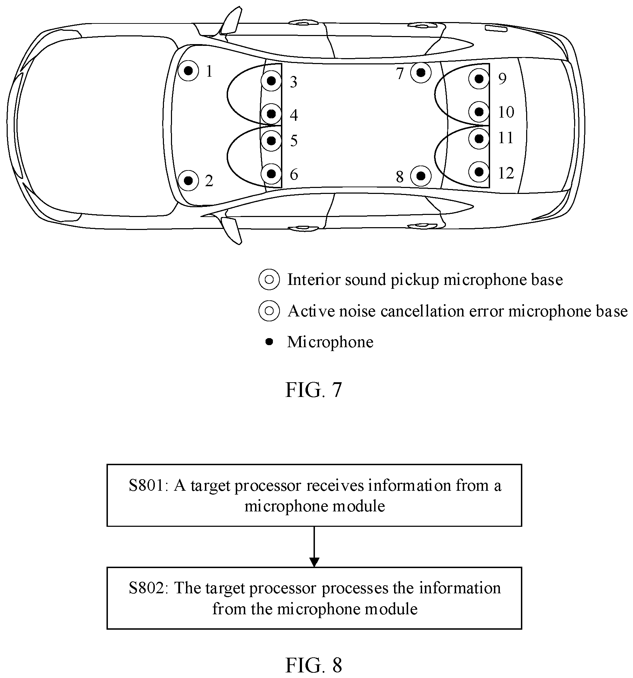

In a possible implementation, when the intelligent device includes a plurality of microphone bases, the microphone 210 can disconnect the pairing with the microphone base 220, and then pair with another microphone base. For a structure and an implemented function of the another microphone base, refer to the corresponding descriptions of the microphone base 220. After the microphone 210 is paired with the another microphone base, the type attribute of the microphone 210 is also inherited from a type attribute of the another microphone base. If the type attribute of the another microphone base is the same as the type attribute of the microphone base 220, the type attribute of the microphone 210 cannot change. If the type attribute of the another microphone base is different from the type attribute of the microphone base 220, the type attribute of the microphone 210 is changed to the type attribute of the another microphone base. The vehicle is used as an example of the intelligent device. For example, refer to FIG. 7.

FIG. 7 shows an example of a microphone module disposed on a vehicle and a position of the microphone module. It is assumed that a microphone and a microphone base in each microphone module have been paired with each other. In a possible implementation, microphone modules numbered 1 and 3 are used as an example. It is assumed that a microphone and a microphone base of the microphone module numbered 1 are respectively briefly referred to as a microphone A and a microphone base A. A microphone and a microphone base of the microphone module numbered 3 are respectively briefly referred to as a microphone B and a microphone base B. It can be learned that a type attribute of the microphone base A is a sound pickup microphone, and then a type attribute of the microphone A is also a sound pickup microphone; a type attribute of the microphone base B is an active noise cancellation microphone, and then a type attribute of the microphone B is also an active noise cancellation microphone. The microphone A and the microphone base A disconnect pairing, and the microphone B and the microphone base B also disconnect pairing. In this case, the microphone A can be in contact connection to the microphone base B, and establish pairing with the microphone base B. Alternatively, the microphone A can establish pairing with the microphone base B in a wireless connection state. After the microphone A is paired with the microphone base B, the microphone A inherits the type attribute of the microphone base B. That is, the type attribute of the microphone A is changed to an active noise cancellation microphone. Optionally, after the microphone B and the microphone base B disconnect from the pairing, the microphone B can establish pairing with the microphone base A, or can be paired with a microphone base in another microphone module (for example, any one of the microphone modules numbered 2 and 4 to 12). This is not limited in embodiments of this application.

In addition, it can be learned from FIG. 7 that, in a possible implementation of this embodiment of this application, an exterior microphone does not need to be disposed outside the vehicle. In this embodiment of this application, the microphone can be wirelessly connected to the microphone base. Therefore, the microphone can be worn with the user (for example, the microphone can be fastened to a collar or a glasses temple through a fastening component like an alligator clip). When the user carries the wireless microphone outside the vehicle, a function like human-machine interaction with the vehicle or voice interaction inside and outside the vehicle can be implemented by using the carried wireless microphone. For example, when the user sends, outside the vehicle, a voice control instruction instructing to open a trunk, the wireless microphone carried by the user can receive the instruction, and send the instruction to a target processor for processing, to control opening of the trunk. The description herein is merely an example, and does not constitute a limitation on this embodiment of this application.

In a possible implementation, based on the foregoing descriptions, it can be learned that the microphone base 220 is fastened to the intelligent device. Therefore, the microphone base 220 has a position attribute. The position attribute indicates a specific position of the microphone base 220 on the intelligent device or a position relative to the intelligent device. The vehicle is used as an example of the intelligent device. For example, in-vehicle coordinates, an in-vehicle position mark, or the like (for example, a driver seat, a front passenger seat, or a rear row seat, or a number like 1, 2, or 3) is used to mark the position of the microphone base 220. The description herein is merely an example, and a specific representation of the position is not limited in embodiments of this application.

In a possible implementation, the position attribute of the microphone base 220 can be preconfigured in the microphone base 220, for example, can be burned into the microphone base 220 when firmware burning is performed on the microphone base 220. Alternatively, in another possible implementation, the position attribute of the microphone base 220 can use a value of a current position that is determined by triggering an automatic positioning function when the microphone base 220 is installed on the intelligent device and that is further recorded. The description herein is merely an example. A manner of determining the position attribute of the microphone base 220 is not limited in embodiments of this application.

In a possible implementation, the microphone 210 also has a position attribute. The position attribute indicates a specific position of the microphone 210 on the intelligent device or a position relative to the intelligent device. The position attribute of the microphone 210 can be determined based on the position attribute of the microphone base 220, or determined by using a wireless positioning technology. For example, after the microphone base 220 determines the position attribute, if the microphone 210 is paired with the microphone base 220 in a wired transmission manner, the microphone 210 inherits the position attribute of the microphone base 220. That is, position attributes of the microphone 210 and the paired microphone base 220 are the same.

Alternatively, for example, after the microphone base 220 determines the position attribute, if the microphone 210 is paired with the microphone base 220 in a wireless transmission manner, the microphone 210 can determine the position of the microphone 210 by using a wireless positioning technology. For example, the intelligent device is a vehicle. The microphone 210 exchanges wireless signals with a plurality of devices that have a wireless positioning capability and that have known positions in the vehicle, and determines a position of the microphone 210 relative to a vehicle body by using the wireless positioning technology. For example, the wireless positioning technology can be an ultrasonic wave wireless positioning technology, an ultra-wideband (ultra-wideband, UWB) wireless positioning technology, a radio frequency identification (radio frequency identification, RFID) wireless positioning technology, or a Wi-Fi wireless positioning technology. A specifically used wireless positioning technology is not limited in embodiments of this application.

Alternatively, when the microphone 210 is paired with the microphone base 220 in a wireless transmission manner, if the microphone 210 does not have a wireless positioning capability, the microphone 210 can inherit the position attribute of the microphone base 220 that is paired with the microphone 210. That is, position attributes of the microphone 210 and the paired microphone base 220 are the same.

In a possible implementation, after determining the position attribute of the microphone 210, the microphone 210 can send the position attribute of the microphone 210 to the target processor. The target processor can correspondingly repose, based on the position attribute, to the sound signal collected by the microphone 210. The vehicle is used as an example. For example, the position attribute indicates that the microphone 210 is located at a first position in the vehicle. In this case, a sound signal collected by the microphone 210 indicates to control a first component in the vehicle. The microphone 210 sends the sound signal to the target processor. The target processor controls, based on the position attribute, a first component that is in the vehicle and that corresponds to the first position, instead of a first component at another position. For example, it is assumed that the position attribute of the microphone 210 indicates that the microphone 210 is located at a position of a front passenger. In this case, the microphone 210 collects a voice control instruction for opening a vehicle window. Then, after receiving the voice control instruction, the target processor controls, with reference to a current position of the microphone 210, to open only a vehicle window of the front passenger. The description herein is merely an example, and does not constitute a limitation on this embodiment of this application.

Alternatively, for example, based on the foregoing descriptions, it can be learned that the microphone 210 can be carried by the user outside the vehicle. In this case, the microphone 210 can determine a current position of the microphone 210 by using the wireless positioning capability of the microphone 210, and send a current position attribute to the target processor. The target processor can correspondingly respond based on a case in which the microphone 210 is located outside the vehicle.

In a possible implementation, the target processor determines, based on the position attribute, that the microphone 210 is located outside the vehicle, and determines, based on the type attribute of the microphone 210, that the microphone 210 is a sound pickup microphone. In this case, the target processor can perform noise cancellation processing and/or external voice response processing on a sound signal collected by the microphone 210. The external voice response processing is responding to the voice signal as an external voice signal of the vehicle. For example, because the sound signal collected outside the vehicle is mixed with relatively much noise, further noise cancellation processing can be performed on the collected sound signal. For example, the sound signal collected by the microphone 210 located outside the vehicle is a voice control instruction instructing to control a component in the vehicle, for example, a control instruction for opening the trunk. In this case, the target processor can open the trunk based on the instruction. If the instruction is a control instruction for starting intelligent driving, the target processor does not respond. The person is outside the vehicle, and the delivered control instruction for starting intelligent driving in this case relates to safety of the vehicle and person. Therefore, the target processor does not respond. In another possible implementation, if the position attribute indicates that the microphone 210 is located in the vehicle, and a voice control instruction collected by the microphone 210 is to open the trunk, the target processor cannot respond. Because the person is in the vehicle, it is not safe to open the trunk. It can be understood that the descriptions herein are merely examples, and do not constitute a limitation on this embodiment of this application.

In a possible implementation, the target processor determines, based on the position attribute, that the microphone 210 is located outside the vehicle, and determines, based on the type attribute of the microphone 210, that the microphone 210 is an active noise cancellation microphone. In this case, the target processor can suspend an active noise cancellation function of the microphone 210. The active noise cancellation microphone is used to collect noise around a human ear, to cooperate with the active noise cancellation system in the vehicle to perform noise cancellation in an area near the human ear. Therefore, when the active noise cancellation microphone is separately taken out of the vehicle, a speaker of the active noise cancellation system in the vehicle cannot participate in active noise cancellation in an area near the human ear outside the vehicle, and noise cancellation effect cannot be achieved. Therefore, the active noise cancellation function can be suspended. It can be understood that the descriptions herein are merely examples, and do not constitute a limitation on this embodiment of this application.

In a possible implementation, the vehicle is used as an example. Based on the foregoing descriptions, it can be learned that the vehicle includes a plurality of microphone modules. All microphones in the plurality of microphone modules can send position attributes of the microphones to the target processor. In a possible implementation, when determining that a distance between positions of the plurality of microphones is less than a preset distance, the target processor can perform combination processing on sound signals collected by the plurality of microphones, or select a sound signal collected by one of the microphones for processing. Combination processing can be performing noise cancellation combination on the sound signals collected by the plurality of microphones, to obtain one combined sound signal, and then further processing the sound signal. In this implementation, because the plurality of microphones are relatively close to each other, the collected sound signals are basically the same. Combination processing is performed or one sound signal is selected for processing, so that computing resources can be saved, and processing efficiency can be improved.

For example, FIG. 8 is a schematic flowchart of a signal processing method according to an embodiment of this application. The method is executed by the target processor, and the method includes but is not limited to the following steps:
S801: The target processor receives information from a microphone module.

In a specific implementation, the microphone module can be, for example, the microphone module 200 shown in FIG. 2. The receiving information from a microphone module includes: receiving information from a microphone 210 and/or from a microphone base 220. For example, the information includes one or more of the following: a sound signal collected by the microphone, the position attribute of the microphone, the connection status between the microphone and the microphone base, a type attribute of the microphone, a model of the microphone, a serial number of the microphone, or the like. For descriptions of the information, refer to the foregoing descriptions. Details are not described herein again.

S802: The target processor processes the information from the microphone module.

In a possible embodiment, the information includes the sound signal collected by the microphone and the position attribute of the microphone; the sound signal indicates to control a first component in the intelligent vehicle; and the position attribute of the microphone indicates that the microphone is located at a first position in the intelligent vehicle. That a processor processes information from a microphone module includes: The processor controls, based on the sound signal and the position attribute, a first component that is in the intelligent vehicle and that corresponds to the first position. For a specific implementation, refer to the related description of the position attribute of the microphone. Details are not described herein again.

In a possible embodiment, the information includes the connection status between the microphone and the microphone base; and the connection status indicates that the microphone and the microphone base are wirelessly connected; and that a processor processes information from a microphone module includes: The processor controls, based on the wireless connection state, the intelligent vehicle to enter a preset sound signal processing mode.

For example, when the microphone is a sound pickup microphone and is in an application scenario of making a call, the preset sound signal processing mode is a privacy call mode; or when the microphone is a sound pickup microphone and is in an application scenario of human-machine voice interaction, the preset sound signal processing mode is a quiet voice interaction mode; or when the microphone is a sound pickup microphone and is in an application scenario of singing, the preset sound signal processing mode is a singing mode; or when the microphone is an active noise cancellation microphone, the preset sound signal processing mode is an active noise cancellation mode.

For a specific implementation of this embodiment, refer to the related description about the microphone being in a wireless connection state. Details are not described herein again.

In a possible embodiment, the information includes the sound signal collected by the microphone, the position attribute of the microphone; and the type attribute of the microphone; the position attribute indicates that the microphone is located outside the intelligent vehicle; and the type attribute of the microphone indicates that the microphone is a sound pickup microphone; and that a processor processes information from a microphone module includes: The processor performs noise cancellation processing and/or external voice response processing on the sound signal based on the position attribute and the type attribute, where the external voice response processing is responding to the sound signal as an external voice signal of the intelligent vehicle. For a specific implementation, refer to the related description of the position attribute of the microphone. Details are not described herein again.

In a possible embodiment, the information includes the position attribute of the microphone and the type attribute of the microphone; the position attribute indicates that the microphone is located outside the intelligent vehicle; and the type attribute of the microphone indicates that the microphone is an active noise cancellation microphone; and that a processor processes information from a microphone module includes: The processor suspends an active noise cancellation function of the microphone based on the position attribute and the type attribute. For a specific implementation, refer to the related description of the position attribute of the microphone. Details are not described herein again.

In a possible embodiment, the information includes a first position attribute of the microphone and a first sound signal collected by the microphone, and includes a second position attribute of another microphone and a second sound signal collected by the another microphone; and the first position attribute and the second position attribute indicate that a distance between positions of the two microphones is less than a preset distance; and that a processor processes information from a microphone module includes: The processor combines the first sound signal and the second sound signal for processing; or selects one of the first sound signal and the second sound signal as a sound signal for processing. For a specific implementation, refer to the related description of the position attribute of the microphone. Details are not described herein again.

In this embodiment of this application, the target processor cooperates to process the information from the microphone and/or the microphone base. For example, the target processor performs corresponding processing, based on the connection status between the microphone and the base, on the sound signal collected by the microphone. For example, the target processor correspondingly responds to the sound information collected by the microphone based on the position attribute of the microphone. This effectively extends an application scenario of the microphone, optimizes use performance of the microphone, and improves application effect of the microphone.

An embodiment of this application further provides a computer-readable storage medium. The computer-readable storage medium stores a computer program. The computer program is executed by a processor, to implement the operation performed by the target processor.

An embodiment of this application further provides a computer program product. When the computer program product is executed by a processor, the operation performed by the target processor is performed.

In conclusion, in embodiments of this application, the microphone in the intelligent device is connected to the base in a detachable manner, so that the microphone can be picked up for use when needed, to optimize use performance of the microphone and improve application effect of the microphone.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should be further understood that, although the following descriptions use terms such as "first" and "second" to describe various elements, these elements should not be limited by the terms. These terms are simply used to distinguish one element from another.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

It should be further understood that the term "include" (also referred to as "includes", "including", "includes", "comprises" and/or "comprising") used in this specification specifies presence of the stated features, integers, steps, operations, elements, and/or components, with presence or addition of one or more other features, integers, steps, operations, elements, components, and/or their components not excluded.

It should further be understood that "one embodiment", "an embodiment", or "a possible implementation" mentioned throughout this specification means that particular features, structures, or characteristics related to the embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics can be combined in one or more embodiments by using any appropriate manner.

Finally, it should be noted that the foregoing embodiments are merely intended for describing the technical solutions of this application other than limiting this application. Although this application is described in detail with reference to the foregoing embodiments, persons of ordinary skill in the art should understand that they can still make modifications to the technical solutions described in the foregoing embodiments or make equivalent replacements to some or all technical features thereof, without departing from the scope of the technical solutions of embodiments of this application.

## Claims

1. A microphone used in an intelligent vehicle, wherein when the microphone is in contact connection to a microphone base, the microphone and the microphone base are in a wired connection state; and when the microphone is separated from the microphone base, the microphone and the microphone base are in a wireless connection state; and
the microphone base is fastened to the intelligent vehicle, the microphone base is configured to pair with the microphone, and the microphone is configured to cooperatively implement voice interaction in the intelligent vehicle.

2. The microphone according to claim 1, wherein when the microphone is paired with the microphone base, the microphone is configured to determine a connection status between the microphone and the microphone base, wherein the connection status is a wired connection state or a wireless connection state.

3. The microphone according to claim 1 or 2, wherein when the microphone is paired with the microphone base, the microphone inherits a type attribute of the microphone base, and the type attribute indicates function types of the microphone base and the microphone.

4. The microphone according to claim 3, wherein the type attribute indicates that the function types of the microphone base and the microphone are a sound pickup microphone type; or the type attribute indicates that the function types of the microphone base and the microphone are an active noise cancellation microphone type.

5. The microphone according to any one of claims 1 to 4, wherein when the microphone is paired with the microphone base, position attributes of the microphone and the microphone base are the same, and the position attributes indicate positions of the microphone base and the microphone in the intelligent vehicle or relative to the intelligent vehicle.

6. The microphone according to any one of claims 1 to 4, wherein when the microphone and the microphone base are in a wireless connection state, a position attribute of the microphone is determined based on a wireless positioning technology, and the position attribute indicates a position of the microphone in the intelligent vehicle or relative to the intelligent vehicle.

7. The microphone according to any one of claims 1 to 6, wherein after the microphone is paired with the microphone base, the microphone is further configured to:
disconnect the pairing with the microphone base; and
pair with a microphone base other than the microphone base.

8. The microphone according to any one of claims 1 to 7, wherein the microphone is configured to send one or more of the following information to the microphone base:
a sound signal collected by the microphone, the position attribute of the microphone, the connection status between the microphone and the microphone base, the type attribute of the microphone, a model of the microphone, or a serial number of the microphone, wherein
the position attribute indicates the position of the microphone in the intelligent vehicle or relative to the intelligent vehicle, the connection status is a wired connection state or a wireless connection state, and the type attribute indicates the function type of the microphone.

9. The microphone according to any one of claims 1 to 7, wherein the microphone is configured to send one or more of the following information to a processor in the intelligent vehicle in a wireless transmission manner:
a sound signal collected by the microphone, the position attribute of the microphone, the connection status between the microphone and the microphone base, the type attribute of the microphone, a model of the microphone, or a serial number of the microphone, wherein
the position attribute indicates the position of the microphone in the intelligent vehicle or relative to the intelligent vehicle, the connection status is a wired connection state or a wireless connection state, and the type attribute indicates the function type of the microphone.

10. The microphone according to any one of claims 1 to 9, wherein
when the microphone and the microphone base are in a wired connection state, the microphone base supplies power to the microphone; or
when the microphone and the microphone base are in a wireless connection state, a battery in the microphone supplies power to the microphone.

11. The microphone according to any one of claims 1 to 10, wherein a fastening component is disposed on the microphone, and the fastening component is configured to fasten the microphone at another position when the microphone and the microphone base are in a wireless connection state.

12. The microphone according to any one of claims 1 to 11, wherein an audio interface is disposed on the microphone, and the audio interface is configured to connect to an external microphone unit.

13. The microphone according to claim 12, wherein the microphone is configured to: when it is detected that the external microphone unit is connected, suspend use of a built-in microphone unit of the microphone, and use the external microphone unit.

14. The microphone according to any one of claims 1 to 13, wherein
the microphone comprises one or more of the following components: an acoustic transducer, a wireless chip, a wireless transceiver, a microcontroller unit MCU, a battery, an indicator, a circuit board, a first circuit connector, a first structural connector, and a housing, wherein
the first circuit connector is configured to implement circuit connection between the microphone and the microphone base; and
the first structural connector is configured to implement structural connection between the microphone and the microphone base.

15. The microphone according to any one of claims 1 to 14, wherein that the microphone is in contact connection to the microphone base comprises: the microphone is in plug-in connection, magnetic connection, snap-fit connection, knob connection, or interference fit connection to the microphone base.

16. A microphone base used in an intelligent vehicle, wherein the microphone base is fastened to the intelligent vehicle, the microphone base is configured to pair with a microphone, and the microphone is configured to cooperatively implement voice interaction in the intelligent vehicle; and
when the microphone base is in contact connection to the microphone, the microphone base and the microphone are in a wired connection state; and when the microphone is separated from the microphone base, the microphone base and the microphone are in a wireless connection state.

17. The microphone base according to claim 16, wherein when the microphone base is paired with the microphone, the microphone base is configured to determine a connection status between the microphone base and the microphone, wherein the connection status is a wired connection state or a wireless connection state.

18. The microphone base according to claim 16 or 17, wherein when the microphone base is paired with the microphone, the microphone inherits a type attribute of the microphone base, and the type attribute indicates function types of the microphone base and the microphone.

19. The microphone base according to claim 18, wherein the type attribute indicates that the function types of the microphone base and the microphone are a sound pickup microphone type; or the type attribute indicates that the function types of the microphone base and the microphone are an active noise cancellation microphone type.

20. The microphone base according to any one of claims 16 to 19, wherein when the microphone base is paired with the microphone, position attributes of the microphone and the microphone base are the same, and the position attributes indicate positions of the microphone base and the microphone in the intelligent vehicle or relative to the intelligent vehicle.

21. The microphone base according to any one of claims 16 to 19, wherein when the microphone base and the microphone are in a wireless connection state, a position attribute of the microphone is determined based on a wireless positioning technology, and the position attribute indicates a position of the microphone in the intelligent vehicle or relative to the intelligent vehicle.

22. The microphone base according to any one of claims 16 to 21, wherein after the microphone base is paired with the microphone, the microphone base is further configured to:
disconnect the pairing with the microphone; and
pair with a microphone other than the microphone.

23. The microphone base according to any one of claims 16 to 22, wherein the microphone base is configured to receive information from the microphone and send the information to a processor in the intelligent vehicle.

24. The microphone base according to claim 23, wherein the information comprises one or more of the following:
a sound signal collected by the microphone, the position attribute of the microphone, the connection status between the microphone and the microphone base, the type attribute of the microphone, a model of the microphone, or a serial number of the microphone, wherein
the position attribute indicates the position of the microphone in the intelligent vehicle or relative to the intelligent vehicle, the connection status is a wired connection state or a wireless connection state, and the type attribute indicates the function type of the microphone.

25. The microphone base according to any one of claims 16 to 24, wherein
when the microphone base and the microphone are in a wired connection state, the microphone base supplies power to the microphone; or
when the microphone base and the microphone are in a wireless connection state, a battery in the microphone supplies power to the microphone.

26. The microphone base according to any one of claims 16 to 25, wherein
the microphone base comprises one or more of the following components: a wireless chip, a wireless transceiver module, an MCU, an indicator, a circuit board, a second circuit connector, a second structural connector, a housing, and a third structural connector, wherein
the second circuit connector is configured to implement circuit connection between the microphone base and the microphone;
the second structural connector is configured to implement structural connection between the microphone base and the microphone; and
the third structural connector is configured to implement structural connection between the microphone base and the intelligent vehicle.

27. The microphone base according to any one of claims 16 to 26, wherein that the microphone base is in contact connection to the microphone comprises: the microphone base is in plug-in connection, magnetic connection, snap-fit connection, knob connection, or interference fit connection to the microphone.

28. A signal processing method, wherein the method comprises:
receiving and processing, by a processor in an intelligent vehicle, information from a microphone module, wherein the microphone module comprises a microphone and a microphone base, the microphone is the microphone according to any one of claims 1 to 15, and the microphone base is the microphone base according to any one of claims 16 to 27.

29. The method according to claim 28, wherein the receiving, by a processor in an intelligent vehicle, information from a microphone module comprises: receiving, by the processor, one or more of the following information from the microphone or the microphone base:
a sound signal collected by the microphone, a position attribute of the microphone, a connection status between the microphone and the microphone base, a type attribute of the microphone, a model of the microphone, or a serial number of the microphone, wherein
the position attribute indicates a position of the microphone in the intelligent vehicle or relative to the intelligent vehicle, the connection status is a wired connection state or a wireless connection state, and the type attribute indicates a function type of the microphone.

30. The method according to claim 28 or 29, wherein the information comprises the sound signal collected by the microphone and the position attribute of the microphone; the sound signal indicates to control a first component in the intelligent vehicle; and the position attribute of the microphone indicates that the microphone is located at a first position in the intelligent vehicle; and
the processing, by a processor, information from a microphone module comprises:
controlling, by the processor based on the sound signal and the position attribute, a first component that is in the intelligent vehicle and that corresponds to the first position.

31. The method according to claim 28 or 29, wherein the information comprises the connection status between the microphone and the microphone base; and the connection status indicates that the microphone and the microphone base are wirelessly connected; and
the processing, by a processor, information from a microphone module comprises:
controlling, by the processor based on the wireless connection state, the intelligent vehicle to enter a preset sound signal processing mode.

32. The method according to claim 31, wherein when the microphone is a sound pickup microphone and is in an application scenario of making a call, the preset sound signal processing mode is a privacy call mode; or
when the microphone is a sound pickup microphone and is in an application scenario of human-machine voice interaction, the preset sound signal processing mode is a quiet voice interaction mode; or
when the microphone is a sound pickup microphone and is in an application scenario of singing, the preset sound signal processing mode is a singing mode; or
when the microphone is an active noise cancellation microphone, the preset sound signal processing mode is an active noise cancellation mode.

33. The method according to claim 28 or 29, wherein the information comprises the sound signal collected by the microphone, the position attribute of the microphone, and the type attribute of the microphone; the position attribute indicates that the microphone is located outside the intelligent vehicle; and the type attribute of the microphone indicates that the microphone is a sound pickup microphone; and
the processing, by a processor, information from a microphone module comprises:
performing, by the processor, noise cancellation processing and/or external voice response processing on the sound signal based on the position attribute and the type attribute, wherein the external voice response processing is responding to the sound signal as an external voice signal of the intelligent vehicle.

34. The method according to claim 28 or 29, wherein the information comprises the position attribute of the microphone and the type attribute of the microphone; the position attribute indicates that the microphone is located outside the intelligent vehicle; and the type attribute of the microphone indicates that the microphone is an active noise cancellation microphone; and
the processing, by a processor, information from a microphone module comprises:
suspending, by the processor, an active noise cancellation function of the microphone based on the position attribute and the type attribute.

35. The method according to claim 28 or 29, wherein the information comprises a first position attribute of the microphone and a first sound signal collected by the microphone, and comprises a second position attribute of another microphone and a second sound signal collected by the another microphone; and the first position attribute and the second position attribute indicate that a distance between positions of the two microphones is less than a preset distance; and
the processing, by a processor, information from a microphone module comprises:
combining, by the processor, the first sound signal and the second sound signal for processing; or
selecting, by the processor, one of the first sound signal and the second sound signal as a sound signal for processing.

36. A microphone system used in an intelligent vehicle, wherein the microphone system comprises one or more microphone modules, each microphone module comprises a microphone and a microphone base, the microphone is the microphone according to any one of claims 1 to 15, and the microphone base is the microphone base according to any one of claims 16 to 27.

37. The microphone system according to claim 36, wherein the microphone system further comprises a processor, and the processor is configured to implement the method according to any one of claims 28 to 35.

38. A vehicle, wherein the vehicle comprises a microphone system, and the microphone system is the microphone system according to claim 36 or 37.

39. A computer-readable storage medium, wherein the computer-readable storage medium stores a computer program, and the computer program is executed by a processor to implement the method according to any one of claims 28 to 35.
